# EUROPEAN PATENT APPLICATION

(11) **EP 1 219 546 A2**
(43) Date of publication of application: **03.07.2002**
(21) Application number: 01310238.9
(22) Date of filing: 07.12.2001
(51) Int. Cl.: B65D 65/40, B65D 75/00, B32B 15/08

(54) **Two-ply laminate for flexible pouch**

(30) Priority: 11.12.2000 US 734141; 24.01.2001 US 768448
(71) Applicant: Sonoco Development, Inc., Hartsville, South Carolina 29550 (US)
(72) Inventor: Bailey, Irwin, Edinburgh, Indiana 46124 (US)
(74) Representative: McNally, Roisin

(57) **Abstract**

A two-ply laminate is provided for production of flexible containers such as stand-up or gusseted pouches for snacks or beverages. The laminate is made from an outer web and an inner web. The outer web provides printability, stiffness and thermal resistance. The inner web is made of three layers. The outer layer may be metallized with aluminum to provide resistance to moisture migration. The middle layer provides barrier qualities for retardation of the migration of slipping agent on an inner or sealing layer. The inner layer provides a sealing quality and a low coefficient of friction to allow the laminate to slide over manufacturing machines.

## Description

### FIELD OF THE INVENTION

The present invention relates to the field of flexible pouches, often used for snack food packaging. Specifically the invention relates to an improved laminate for use in manufacture of flexible pouches.

### BACKGROUND OF THE INVENTION

For many years, consumable products, such as snacks have been packaged and sold in metal cans. Recently, flexible pouches have been used in place of rigid containers for a variety of snacks. Flexible pouches are lighter and are typically lower in cost to manufacture.

Flexible pouches chiefly come in two forms, the pillow or flat shaped form and the stand-up or gusseted form. Flat or pillow shaped pouches are typically made from one longitudinally folded or two separate sheets of laminated material. The stand-up form is generally manufactured using three sheets of laminated material. Both types are sealed by heat-sealing after filling. The stand-up form is typically used for beverage packaging. One example of a stand-up flexible pouch is disclosed by U.S. Patent No. 5,860,743 to Larkin et al.

Typically, the manufacture of pouches and laminated film bags utilizes a three-ply laminate. A few examples of multi-layer laminates are disclosed in U.S. Pat. Nos. 4,085,244; 4,457,960; and Re. 35,567. The conventional laminate generally comprises a print surface web, a barrier web, and a sealant web. The barrier web is often metallized by aluminum deposition to decrease or prevent migration of water. The lamination may include, but is not limited to, solventless, solvent based and water based lamination systems. The three web system was previously necessary to provide certain desirable qualities: low moisture penetrability, high seal strength, and high impact strength. The print web provided the necessary impact strength and thermal resistance. The metallized barrier web provided low moisture penetrability, but was typically incapable of forming a strong seal. The third, sealable web, was necessary to provide the desired high seal strength.

Production of pouches using the three-ply laminate system is costly because three distinct webs are required for the manufacture thereof. The present invention eliminates the need for a three-ply laminate by providing all of the necessary qualities of a flexible pouch using only a two-ply laminate.

### SUMMARY OF THE INVENTION

The present invention relates to a two-ply laminate suitable for the manufacture of flexible pouches. The laminate comprises an outer web and an inner web. The outer web provides printability, stiffness and thermal resistance. The inner web, which may also be referred to as the sealant web, comprises three layers designated as the A, B and C layers relating respectively from most outward to most inward.

The A layer of the sealant web is a barrier layer designed to be metallized, preferably by aluminum deposition.

The C layer is the inner most layer of the sealant web and provides the seal strength required of the sealant web. Seal strength becomes important when the pouch is thermally welded closed, C layer of a first sheet contacting and adhering to the C layer of a second sheet, after the desired product has been placed within the bag. The C layer may also comprise slip and / or anti-block additives, providing a low coefficient of friction against itself. The low coefficient of friction allows the film to easily slide across machine elements of the pouch or bag maker consistently, without producing wrinkles in the film and preventing jamming as the film moves through the machines.

Layer B is situated in between layers A and C. The B layer provides stiffness and bulk to the sealant web. The B layer further provides resistance to the migration of the slip additives of Layer A through the film mass. The migration resistant quality thereby prevents the slip additives from interfering with the metallized surface of layer A and destroying the adhesion of the metal deposition.

While the two-ply laminate of the current invention is extremely well suited for the production of snack pouches, it should be obvious to one skilled in the art of packaging that the two-ply laminate disclosed herein could be used in a great many other fields of packaging currently employing laminates made from three or more webs.

### BRIEF DESCRIPTION OF THE DRAWINGS

FIG. 1 is a cross section of a two-ply laminate according to the current invention.
FIG. 2 is a schematic view of a two-ply laminate according to the present invention wherein the outer layer and adhesive are being pulled away from the inner layer.
FIG. 3 is a perspective view of a stand-up pouch made with a two-ply laminate.

### DETAILED DESCRIPTION OF THE DRAWINGS

Referring to the drawings, specifically FIG.'s 1 and 2, where like numerals identify like elements, there is shown a laminate 10 comprising two webs. The laminate has many commercial uses which should be apparent to those skilled in the art of packaging for various commodities. One use of the laminate of the current invention is in the manufacture of pouches, and particularly in the manufacture of stand-up pouches used as beverage containers or as pouches for snack foods. It should be noted however that the laminate may be used in other applications as well.

The inner web 40 of the laminant 10 is comprised of three layers, a metallized layer 42, a barrier layer 44, and a sealing layer 46. In the preferred embodiment, the inner web 40, which may also be referred to as the sealant web, may have a thickness of about 1.0 mils to 5.0 mils. The metallized layer 42 is preferably metallized with aluminum and oriented such that the aluminum deposition is closest to the outer web. The metallized layer 42 may be formed using various substrates and methods known to those skilled in the art of packaging material manufacture. Some substrates which may be used in the metallization process include Polyester, PEN (Kaladex), Polyimide (Kapton), Polyethylene (Low, Medium & High Density), Polyvinyl Chloride, Polypropylene Polyamide (Nylon), and Acetate. One method which may be used is induction vacuum metallization, which may be obtained commercially from Metallized Engineering, Inc. of Agawam, MA. It is preferable that the layer be metallized with uniform deposition and adhesion.

The sealing layer 46 may be comprised of any material which is known to those skilled in the art to be suitable for sealing. Numerous conventional sealing methods are known, heat sealing being one such method. The sealing layer 46 should preferably provide a seal strength of 500 to 8000 grams per inch when sealed to itself; that is, when two laminates of the present invention are sealed together, sealing layer to sealing layer. Some of the materials suitable for the sealing layer 46 are polypropylenes, polypropylene copolymers and ter-polymers, metallocene polyethylene (MPE) resins, low density polyethylene (LDPE), linear LDPE (LLDPE), ethylene vinyl acetates (EVA) and the like. The sealing layer 46 preferably also contains one or more slip and / or anti-block additives. Common slip agents are amides generally derived from naturally occurring vegetable oils and animal fats which may be saturated of unsaturated. Two of the more common slip amides are oleamide and erucamide fatty acid derivatives. The slip additives preferably provide the sealant web a coefficient of friction, as measured against itself (e.g. sealant to sealant) of 0.7 to 0.1, most preferably 0.5 to 0.1. A web with a coefficient of friction within this range allows the sheet to slide across the machine components involved in the manufacturing process without producing wrinkles in the sheet or jamming the machines.

The barrier layer 44 is disposed between the metallized layer 42 and the sealing layer 46. The barrier layer 44 may comprise any suitable material, many of which are well known to those skilled in the art of packaging materials. Polyethylene is one suitable material. The barrier layer 44 provides stiffness and bulk to the web. Another function of the barrier layer is to retard the migration of slip additives from the sealing layer to the metallized layer. It is known that slip additives can interfere with the adhesion of aluminum at the deposition layer. Additives may therefore be contained within the barrier layer to retard migration of slip agents therethrough. U.S. Pat. No. 5,308,666 to Borchardt discusses that the use of a polyvinyl alcohol or butadiene/styrene as a component in a mixture with polyethylene is believed to sequester the migration of slip agent, although the mechanism of the interaction of the slip agent and the polyvinyl alcohol or butadiene/styrene is not fully understood at present.

The inner sealant web 40 of the laminant 10 must be of a thickness such that it exhibits strength and impenetrability. The total thickness of the sealant web 40 of the preferred embodiment is approximately 1.0 to 5.0 mils. As used herein, one mil is equal to 1/1000 of an inch or 2.54 x 10⁻⁵ meter.

The outer web or print web 20 of the laminant 10 provides printability, stiffness, and thermal resistance. The outer web 20 may comprise any appropriate resin known to those skilled in the art of packaging, typically polyethylene terephthalate (PET) or a PET-Copolymer. A number of techniques have been developed to enhance the adhesion of ink onto a print web. Although surface modification techniques (e.g., flame or corona treatment, buffing, etc.) can be used to prepare the surface of a polymeric film for printing, application of a chemical primer coating is more commonly used.

The outer web may be attached to the inner web to form the laminate using an appropriate method. The methods will vary depending on the specific materials of which the inner and outer webs are comprised. Various adhesives and extrusion laminations, conventional in the manufacturing of laminates and well known to those skilled in the art, are suitable.

The two-ply laminate construction described herein has been found to be very effective against moisture transmission. The moisture vapor transmission rate of the preferred embodiment has been found to be 0.1 to 0.01 grams / 100 in² / 24 hours, comparable or better than most known three-ply laminates. The laminate of the present invention may be used to form any number of containers, protective sheets, and other popular products. It should be obvious to one skilled in the art that the current invention is not limited in scope to the examples provided herein. Currently, it is contemplated that the best use of the invention is for the manufacture of stand-up or gusseted pouches for use as snack containers.

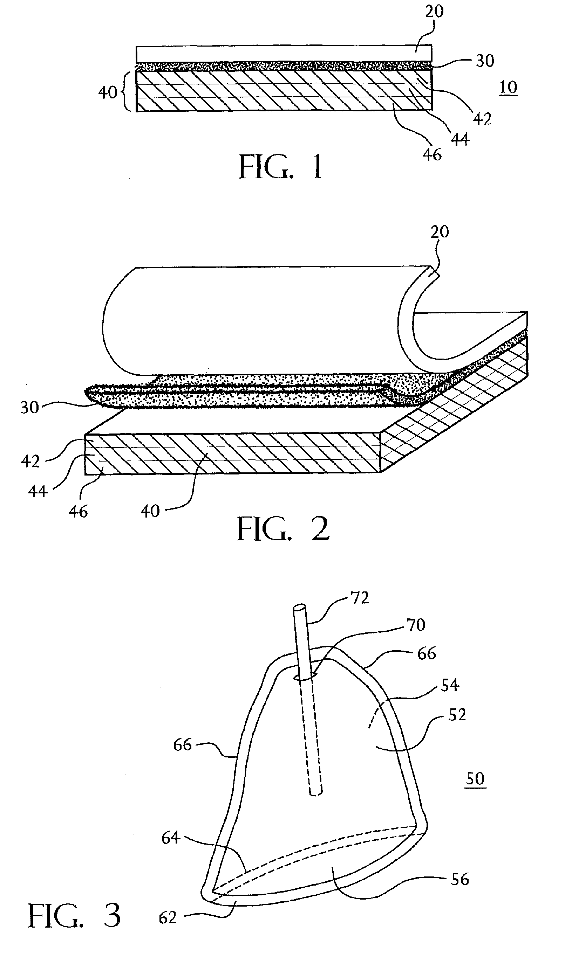

As shown in FIG. 3, the laminate 10 described herein may be used to form a stand-up or gusseted pouch 50. Conventional pouch design may be used to manufacture the pouch 50. Stand-up pouches 56 are typically made with three separate laminate sheets. Base 56 is a circular or oval shape. Side 54 is positioned adjacent side 52. Sides 52 and 54 are heat sealed together at seam 66, which extends upwardly from the base 56, continues across the top and extends downwardly back to the base around the periphery of sides 52 and 54, thereby leaving sides 50 and 52 unsealed along their bottom aspect. Base 56 is heat sealed to side 52 along seam 62. Bottom 56 is heat sealed to side 54 along seam 64, shown in the FIG. 3 behind seam 62. A rim (not shown) may extend downwardly from seams 62 and 64 which may serve to stabilize the pouch while standing upright. When used as a beverage container (as shown in Figure 3), the pouch may further comprise an aperture 70 in side 52 through which a straw 72 may be inserted.

When used as a container for snack foods such as dry nuts, cookies, dog treats and the like, the pouch may include a fourth laminated sheet. The fourth sheet forms a top for the pouch. This type of pouch includes a standard recloseable zipper, well known to those skilled in the art. Preferably, the zipper is an approximately 20 mm wide polyethylene zipper with an ethylene vinyl acetate sealant system.

The present invention may be embodied in other specific forms without departing from the spirit or essential attributes thereof and, accordingly, reference should be made to the appended claims, rather than to the foregoing specification, as indicating the scope of the invention.

## Claims

1. A laminate comprising, in order:
a first web and a second web, said second web comprising, in order,
a metallized layer,
a barrier layer, and
a sealing layer;
the sealing layer comprising a slip agent; and
the barrier layer retarding the migration of the slip agent from the sealing layer to the metallized layer.

2. The laminate of claim 1 wherein the sealing layer further comprises slip and anti-blocking agents.

3. The laminate of claim 2 wherein the barrier layer retards the migration of the slip and anti-blocking agents from the sealing layer to the metallized layer.

4. The laminate of claim 1 wherein the metallized layer is metallized by aluminum deposition.

5. The laminate of claim 1 wherein the first web is a print web.

6. The laminate of claim 1 wherein the first web is a heat resistant web.

7. The laminate of claim 1 further comprising an adhesive disposed between the first web and the second web.

8. The laminate of claim 1 further comprising an extrusion lamination disposed between the first web and the second web.

9. The laminate of claim 1 wherein the second web is between about 1.0 to 5.0 mils thick.

10. The laminate of claim 1 wherein the metallized layer is in contact with the first web.

11. The laminate of claim 1 wherein the laminate has a coefficient of friction between about 0.5 and 0.1 as measured against itself.

12. The laminate of claim 1 wherein the sealing layer is capable of being sealed to the same sealing layer of a second laminate to form a seal having a strength of 500 to 8000 grams per inch.

13. The laminate of claim 1 having a moisture vapor transmission rate of 0.05 to 0.01 g / 100 in² / day.

14. A pouch comprising at least one laminate sheet comprising:
a print web; and
a metallized sealant web, said metallized sealant web comprising, in order,
a metallized layer,
a barrier layer, and
a sealing layer containing a slip agent,
the metallized layer being in contact with the print web, and
the barrier layer retarding the migration of the slip agent from the sealing layer to the metallized layer.

15. The laminate of claim 14 wherein the metallized layer is metallized by aluminum deposition.

16. The pouch of claim 14 further comprising an adhesive disposed between the print web and the metallized sealant web.

17. The pouch of claim 14 further comprising an extrusion lamination disposed between the print web and the metallized sealant web.

18. The pouch of claim 14 wherein the sealant web is between about 1.0 to 5.0 mils thick.

19. The pouch of claim 14 wherein the laminate has a coefficient of friction between about 0.7 and 0.1 as measured against itself.

20. The laminate of claim 14 wherein the sealing layer may be heat sealed to the same sealing layer of a second laminate to form a seal having a strength of 500 to 8000 grams per inch.

21. The laminate of claim 14 having a moisture vapor transmission rate of 0.1 to 0.01 g / 100 in² / day.

22. The laminate of claim 14 wherein the sealing layer further comprises slip and anti-blocking agents.

23. The laminate of claim 22 wherein the barrier layer retards the migration of the slip and anti-block agents.

24. A laminate comprising, in order:
a first web and a second web,
said second web comprising, in order,
a metallized layer,
a barrier layer, and
a sealing layer.

25. A pouch comprising at least one laminate sheet comprising:
a heat resistant web; and
a metallized sealant web, said metallized sealant web comprising, in order,
a metallized layer,
a barrier layer, and
a sealing layer containing a slip agent,
the metallized layer being in contact with the heat resistant web, and
the barrier layer retarding the migration of the slip agent from the sealing layer to the metallized layer.

26. The laminate of claim 25 wherein the metallized layer is metallized by aluminum deposition.

27. The pouch of claim 25 further comprising an adhesive disposed between the heat resistant web and the metallized sealant web.

28. The pouch of claim 25 further comprising an extrusion lamination disposed between the heat resistant web and the metallized sealant web.

29. The pouch of claim 25 wherein the sealant web is between about 1.0 to 5.0 mils thick.

30. The pouch of claim 25 wherein the laminate has a coefficient of friction between about 0.7 and 0.1 as measured against itself.

31. The laminate of claim 25 wherein the sealing layer may be heat sealed to the same sealing layer of a second laminate to form a seal having a strength of 500 to 8000 grams per inch.

32. The laminate of claim 25 having a moisture vapor transmission rate of 0.1 to 0.01 g / 100 in² day.

33. The laminate of claim 25 wherein the sealing layer further comprises slip and anti-blocking agents.

34. The laminate of claim 33 wherein the barrier layer retards the migration of the slip and anti-block agents.
